# FASCICULE DE BREVET EUROPEEN

(11) **EP 3 459 853 B1**
(45) Date de publication et mention de la délivrance du brevet: **04.12.2019**
(21) Numéro de dépôt: 18195457.9
(22) Date de dépôt: 19.09.2018
(51) Int. Cl.: B64D 17/80, B64D 17/62, B64D 17/40

(54) **DISPOSITIF DE SÉCURITE CONÇU POUR ÉQUIPER UNE SELLETTE DE PARAPENTE OU D'AÉRONEF, ET SELLETTE ÉQUIPÉE D'UN TEL DISPOSITIF**
SICHERHEITSVORRICHTUNG FÜR DIE AUSSTATTUNG EINES GURTZEUGS FÜR GLEITSCHIRM ODER LUFTFAHRZEUG, UND MIT EINER SOLCHEN VORRICHTUNG AUSGESTATTETES GURTZEUG
SAFETY DEVICE FOR EQUIPPING A PARAGLIDER OR AIRCRAFT SEAT, AND SEAT EQUIPPED WITH SUCH A DEVICE

(30) Priorité: 19.09.2017 FR 1770991; 13.11.2017 FR 1771211; 23.05.2018 FR 1870594
(43) Date de publication de la demande: 27.03.2019
(73) Titulaire: Gallat, Jean-Philippe, 69110 Sainte Foy les Lyon (FR)
(72) Inventeur: Gallat, Jean-Philippe, 69110 Sainte Foy les Lyon (FR)
(74) Mandataire: Cabinet Laurent & Charras

(56) Documents cités:
- EP-A1- 0 061 353
- EP-A2- 0 716 015
- US-A- 6 164 595

## Description

### DOMAINE TECHNIQUE

La présente invention concerne un dispositif de sécurité conçu pour équiper une sellette de parapente ou d'aéronef, et assurer une éjection rapide d'un parachute de secours. L'invention concerne également une sellette équipée d'un tel dispositif.

Le domaine de l'invention est celui des dispositifs d'éjection de parachute de secours, équipant la majorité des sellettes de parapente ou d'aéronefs ultra légers, tels que les deltaplanes, planeurs et paramoteurs.

La présente description décrit principalement l'implantation du dispositif sur une sellette de parapente, mais reste valable pour tout type d'aéronef ultraléger.

### ART ANTERIEUR

En cas de situation de détresse, telle qu'une fermeture de la voile du parapente, le parapentiste est conduit à éjecter son parachute de secours.

De manière connue, le parachute de secours est plié et contenu dans un petit sac en tissu. Ce sac se ferme à l'aide d'un rabat et d'anneaux de caoutchouc passant dans les oeillets du rabat et bloqués par les suspentes du parapente. Ce sac est dénommé « parachute opening device » en anglais, couramment abrégé par l'acronyme « pod ». Dans un but de simplification, ce terme sera employé dans la présente description.

Le pod permet l'extraction du parachute avant son déploiement, à distance de la sellette. Le pod est inséré dans une poche en tissu, solidaire de la sellette. Une poignée reliée au pod permet d'éjecter le pod et le parachute hors de la poche en tissu.

Les analyses d'accidentologie réalisées par les fédérations de vol libre montrent que des retards ou l'absence de lancement du parachute de secours sont loin d'être exceptionnels, et conduisent aux conséquences les plus graves.

Une éjection efficace du parachute de secours nécessite un mouvement du bras ample et rapide qui peut s'avérer difficile, voire, impossible en situation d'urgence.

La présente invention a pour objet d'implanter dans une sellette un dispositif d'éjection du parachute de secours, se substituant au mouvement du bras.

Ainsi, un tel dispositif de sécurité doit satisfaire aux conditions suivantes :
1. Le dispositif doit assurer une éjection rapide et fiable du parachute, avec une dynamique aussi véloce que celle préconisée par le constructeur de parachute.
2. Le surpoids du dispositif doit rester modeste et son volume doit demeurer dans le volume habituel des parachutes de secours.
3. La maintenance et le réarmement doivent être simples, et rester accessibles à tout pratiquant de parapente.
4. Le dispositif doit s'adapter à l'économie générale de conception des sellettes actuelles, voire doit pouvoir s'insérer dans celles en usage.
5. Le dispositif ne doit pas constituer un point dur ou saillant dans le volume de la sellette.
6. Une éjection manuelle par poignée doit rester possible en cas de défaillance ou d'oubli d'armement de l'éjecteur.
7. Le dispositif ne doit présenter aucun risque lors du transport (agrément IATA en particulier) ou du gonflage, tant pour les usagers que pour le matériel.
8. Enfin le surcoût induit par la mise en œuvre du dispositif doit être raisonnable.

EP 0 716 015 décrit un exemple de dispositif de sécurité permettant d'éjecter un parachute de secours. Le dispositif comprend une bouteille de gaz comprimé, et un airbag agencé entre une coque inférieure fixe et une coque supérieure mobile. Lors du gonflage de l'airbag, la rupture d'éléments de maintien permet la séparation des deux coques et la libération du parachute.

EP 0 061 353 décrit un autre exemple de dispositif, comprenant un ensemble de ressorts actionnés par le pilote pour déployer le parachute.

Comparativement, le dispositif selon l'invention a pour avantage d'assurer une éjection fiable d'un parachute disposé dans une poche de secours, qui est soumise à des contraintes, en particulier de torsion, dans la sellette.

### EXPOSE DE L'INVENTION

Le but de la présente invention est de proposer un dispositif de sécurité amélioré, satisfaisant aux conditions énoncées plus haut.

A cet effet, l'invention a pour objet un dispositif de sécurité conçu pour équiper une sellette de parapente ou d'aéronef, le dispositif comprenant :
- une poche de secours, qui est prévue pour être intégrée à la sellette, qui comprend un matériau résistant à une expansion radiale et axiale, et qui présente une face débouchante et un fond ;
- un pod inséré dans la poche de secours ;
- un parachute de secours plié dans le pod ;
- un airbag agencé entre le fond de la poche de secours et le pod ; et
- des moyens d'expansion de l'airbag ;
dans lequel lors de l'expansion de l'airbag, le pod est éjecté par la face débouchante de la poche de secours, et le parachute de secours se déploie.

Ainsi, l'invention permet de proposer un dispositif fiable et efficace pour l'éjection du parachute de secours, pouvant être facilement intégré à une sellette existante.

La conception du dispositif est compatible avec la majorité des sellettes proposées sur le marché. Aussi, les modifications structurelles des sellettes existantes resteront mineures, voire non nécessaires.

Avantageusement, le dispositif peut assurer l'éjection du parachute de secours à une vitesse de l'ordre de 12 m/s en sortie de la poche. Cette vitesse est maintenue à ce niveau jusqu'à une accélération de 4G, lorsque la voile du parapente se met en autorotation. Au sol, le dispositif délivre une vitesse d'éjection du parachute de secours (105) dont l'énergie d'impact est inférieure à 60 joules environ.

Selon d'autres caractéristiques avantageuses de l'invention, prises isolément ou en combinaison :
- Le dispositif forme un ensemble monobloc pour son implantation dans la sellette.
- Le dispositif est dépourvu d'élément ruptible dans la poche de secours.
- La poche de secours comprend un matériau souple, par exemple un textile.
- La poche de secours comprend un matériau rigide, par exemple un polymère thermoplastique ou thermodurcissable.
- La poche de secours présente une forme allongée.
- La poche de secours a une forme rectangulaire, avec des arêtes internes arrondies, en section transversale.
- Le pod a une forme rectangulaire, avec des arêtes externes arrondies, en section transversale.
- Le pod a une paroi externe comportant des arêtes convexes, lesquels sont disposées le long d'arêtes concaves internes de la poche de secours, assurant ainsi la congruence entre le pod et la poche de secours lors de l'éjection du pod.
- L'airbag est une chambre formée directement dans la poche de secours.
- L'airbag est un élément distinct de la poche de secours, disposé dans la poche de secours.
- L'airbag a une paroi externe en forme d'accordéon, ayant des plis externes disposés en appui contre les parois internes de la poche de secours, assurant ainsi la congruence entre l'airbag et la poche de secours lors de l'expansion de l'airbag.
- L'airbag comporte un ou plusieurs joncs extensibles, assurant la congruence entre l'airbag et la poche de secours lors de l'expansion de l'airbag.
- L'airbag comprend au moins une face armée par un jonc extensible assurant une bonne congruence avec la paroi interne de la poche de secours.
- L'airbag a une face plane disposée au contact du pod, cette face plane étant plus large que la génératrice externe de l'airbag, assurant ainsi un mouvement de prétension préalable du pod avant l'expansion de l'airbag.
- La face de l'airbag disposée au contact du pod présente une partie plus rigide.
- La partie plus rigide est ajourée d'un orifice.
- L'airbag est constitué d'un cylindre dont un plan est solidaire ou plaqué contre le fond de la poche de secours. L'airbag est armé de joncs extensibles assurant sa rigidité et sa congruence avec la poche de secours et venant appuyer le pod contre un ou plusieurs volets obturant la face débouchante de la poche de secours.
- L'airbag comprend des bandes de tissus formant des anneaux aplatis constituant chacun un cylindre.
- Les deux anneaux sont superposés et reliés par un anneau formant une surface conique tronquée.
- Les anneaux sont constitués de bandes de tissu alignées et assemblées de façon à générer une surface hyperboloïde à une nappe enserrant un volume se déployant radialement lors du gonflement de l'airbag.
- L'airbag est constitué d'un sac gonflable, dont l'expansion est contrariée par des cloisons internes, ajourées afin de permettre la circulation du gaz de gonflage.
- L'airbag a une paroi percée d'un ou plusieurs orifices.
- Le dispositif comprend un ou plusieurs volets obturant la face débouchante de la poche de secours.
- Le dispositif comprend deux brins élastiques recourbés délimitant des lumières, dont un brin libre et un brin prévu pour être arrimé à la sellette. Les brins sont accolés et solidarisés suivant un axe de tension par le passage d'un jonc dans leurs lumières respectives pour former une chaîne élastique. Un jonc ou un crochet ouvert relié à une poignée de secours passant dans la lumière du brin libre maintient la tension de la chaîne élastique ainsi formée. Une rupture de la chaîne élastique libère un volet obturant la face débouchante de la poche de secours.
- Le dispositif comprend un cutter qui, en étant actionné, sectionne le brin libre et rompt la chaîne élastique, libérant le volet.
- Le pod comprend plusieurs rabats qui enveloppent le parachute de secours et des joncs semi-rigides qui raidissent les rabats et assurent la rigidité du pod et sa congruence avec la poche de secours.
- Le pod comprend des joncs semi-rigides, continus ou discontinus, coïncidant avec les génératrices de la poche de secours ou disposés en biais par rapport auxdites génératrices, et dont les élasticités conjuguées assurent la congruence du pod avec la paroi interne de la poche de secours.
- Le pod comprend un jonc semi-rigide annulaire qui tend et rigidifie la face du pod orientée vers la face débouchante de la poche de secours.
- Les moyens d'expansion de l'airbag comprennent au moins une cartouche de gaz comprimé et un système de percussion, qui assure la libération du gaz stocké dans l'au moins une cartouche de gaz comprimé.
- L'au moins une cartouche de gaz comprimé est disposée à l'intérieur de l'airbag.
- L'au moins une cartouche de gaz comprimé est disposée à l'extérieur de l'airbag.
- Le système de percussion comprend un corps et une masselotte mobile, coulissante dans une rainure usinée ou moulée dans ledit corps, suivant un axe d'éjection du pod. La masselotte a une longueur inférieure à une face de glissement de la rainure. La masselotte est conçue pour obturer un conduit reliant un volume en surpression à un volume en dépression.
- La masselotte est percée, perpendiculairement au conduit, par une rainure oblongue dont la distance entre les faces adjacentes va croissante dans le sens inverse de l'axe d'éjection.
- La masselotte mobile suivant l'axe d'éjection est repoussée par un ressort dans le sens de l'éjection, et en ce qu'un orifice de quelques dixièmes de millimètres de diamètre relie l'air libre à la face de la rainure opposée au ressort.
- Le système de percussion est en communication avec l'airbag du dispositif et un airbag dorsal intégré à la sellette.
- Le système de percussion comprend un réducteur d'échappement et un diffuseur interposés entre la cartouche et l'airbag dorsal intégré à la sellette.
- Le système de percussion comprend un déclencheur pyrotechnique libérant simultanément deux percuteurs, maintenus par un épaulement dans une came et poussés par deux ressorts de compression.
- Le système de percussion comprend une cartouche de gaz assurant l'expansion de l'airbag agencé dans la poche de secours et l'éjection du pod contenant le parachute de secours, et une cartouche de gaz assurant l'expansion de l'airbag dorsal équipant la sellette.
- Le système de percussion comprend deux cartouches de gaz comprimé, qui sont une cartouche d'argon et une cartouche de dioxyde de carbone.
- Le ou les volets sont retenus de part et d'autre par un anneau replié, passant par un orifice traversant le ou les volets, formant deux paires de boucles coaxiales dans lesquelles passent, sur une première face du volet, un axe de déverrouillage ou une boucle et, sur une deuxième face du volet, une goupille reliée à une poignée de secours.
- Le dispositif comprend un axe de déverrouillage, constitué d'un jonc ou d'un axe retiré par un vérin rentrant, passant conjointement dans la boucle interne de l'anneau replié et dans une boucle dont les brins sont conçus pour être solidaires de la sellette ou du ou des volets.
- Le dispositif comprend un cutter qui, en étant actionné, sectionne un brin d'une boucle passant dans la boucle interne de l'anneau replié, et libère le ou les volets.
- Le cutter est mécanique
- Le cutter est pyrotechnique.

L'invention a également pour objet une sellette de parapente ou d'aéronef, caractérisé en ce qu'elle est équipée d'un dispositif de sécurité tel que mentionné ci-dessus.

De préférence, la poche de secours est solidarisée à la sellette, soit par des moyens inamovibles tels qu'une couture ou un rivetage, soit par des moyens amovibles tels qu'une fermeture éclair, restreignant un déplacement relatif entre la poche de secours et la sellette.

### BREVE DESCRIPTION DES DESSINS

L'invention sera mieux comprise à la lecture de la description qui va suivre, donnée uniquement à titre d'exemple non limitatif et faite en référence aux dessins annexés sur lesquels :
- la figure 1 est une vue en perspective d'une sellette équipée du dispositif de sécurité conforme à l'invention, avec une section montrant les éléments constitutifs du dispositif, incluant une poche de secours, un pod et un airbag ;
- la figure 2 est une vue en perspective partielle, incluant une section longitudinale, de l'airbag conforme à un premier mode de réalisation ;
- la figure 3 est une vue en perspective montrant le système de déverrouillage d'un volet obturant la poche de secours, selon un premier mode de réalisation ;
- la figure 4 est une coupe partielle du système de déverrouillage de la figure 3 ;
- la figure 5 est une vue en perspective du pod selon un deuxième mode de réalisation, équipé de joncs semi-rigides assurant la congruence avec la poche ;
- la figure 6 est une vue en perspective du pod selon un troisième mode de réalisation, équipé de joncs semi-rigides assurant la congruence avec la poche ;
- la figure 7 est une section montrant un système de percussion selon un premier mode de réalisation, associé à une seule cartouche de gaz, pour assurer le gonflage de l'airbag, et empêcher une éjection dont la puissance peut engendrer des lésions corporelles en dehors des domaines de vol ;
- la figure 8 est une section du système de percussion selon la ligne VIII-VIII à la figure 7 ;
- la figure 9 est une coupe montrant un système de percussion selon un deuxième mode de réalisation, associé à une seule cartouche de gaz, pour assurer le gonflage de l'airbag combiné à une expansion de gaz dans le volume de la poche ;
- la figure 10 est une coupe montrant un système de percussion selon un troisième mode de réalisation, associé à deux cartouches de gaz, pour assurer le gonflage de l'airbag combiné à une expansion de gaz dans le volume de la poche ;
- la figure 11 est une coupe du système de percussion selon la ligne XI-XI à la figure 10;
- la figure 12 est une vue en perspective de l'airbag conforme à un deuxième mode de réalisation ;
- la figure 13 est une vue de face de l'airbag selon la flèche XIII à la figure 12 ;
- la figure 14 est une section longitudinale partielle du dispositif, montrant l'équilibre des pressions dans la poche lors de l'éjection du pod, sous l'action de l'airbag des figures 12 et 13 ;
- la figure 15 est une vue en perspective de l'airbag conforme à un troisième mode de réalisation ;
- la figure 16 est une vue en perspective montrant le système de déverrouillage d'un volet obturant la poche de secours, selon un deuxième mode de réalisation ; et
- la figure 17 est une vue en perspective analogue à la figure 16, montrant le système de déverrouillage d'un volet obturant la poche de secours, selon un troisième mode de réalisation.

### EXPOSE DETAILLE DE L'INVENTION

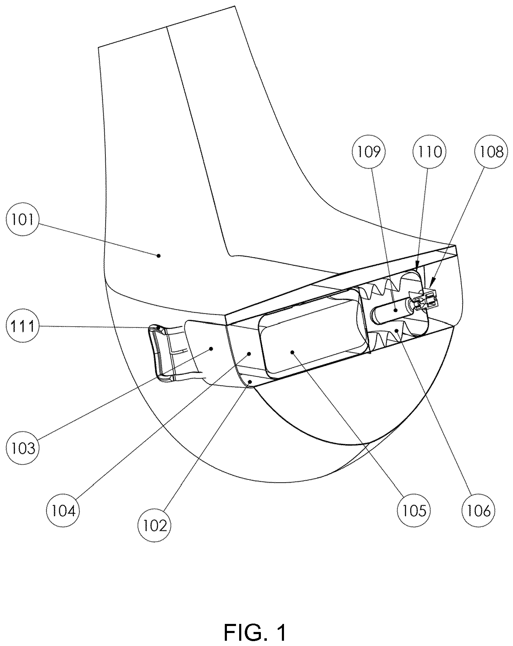

Sur les figures 1 à 4 est représenté un dispositif de sécurité conforme à un premier mode de réalisation de l'invention, conçu pour équiper une sellette (101) de parapente ou d'aéronef.

Le dispositif comprend une poche de secours (102), un volet (103), un pod (104), un parachute de secours (105), un airbag (106), un système de percussion (108), une cartouche de gaz (109) et une poignée (111). De manière avantageuse, le dispositif forme un ensemble monobloc pour son implantation dans la sellette (101).

La poche (102) est intégrée dans une cavité de la sellette (101). La poche (102) présente une face débouchante obturée par un volet (103) amovible, et un fond (110) opposé au volet (103). Le pod (104) est inséré dans la poche (102). Le parachute (105) est plié dans le pod (104). L'airbag (106) est disposé entre le fond (110) de la poche (102) et le pod (104).

Lors de l'expansion de l'airbag (106), le pod (104) est éjecté par la face débouchante de la poche (102), et le parachute de secours (105) se déploie.

La poche (102) a une face débouchante sur une face latérale de la sellette (101). La poche (102) peut soit se substituer à une poche de secours préexistante dans la sellette (101), soit être insérée dans cette poche préexistante.

La poche (102) comprend un matériau résistant à une expansion radiale et axiale, plus précisément résistant aux pressions radiales et axiales générées par l'expansion de l'airbag (106) afin de ne pas déformer, voire déchirer, des éléments de sellette (101).

De préférence, la poche (102) est réalisée en matériau souple, par exemple en textile synthétique, dont le tissage limite l'expansion radiale ou axiale. La souplesse du matériau facilite l'implantation de la poche (102) dans tout type de sellette (101). En cas de choc, la poche (102) va pouvoir transmettre un effort au parachute de secours (105) et assurer un amortissement.

En alternative, la poche (102) peut être réalisée en matériau rigide, par exemple en polymère thermoplastique ou thermodurcissable.

Les parois internes de la poche (102) vont guider le pod (104) vers l'orifice d'éjection ménagé dans la face débouchante, lors de la poussée de la partie expansive du dispositif constituée par l'airbag (106).

La poche (102) est obturée par un ou plusieurs volets (103), sous forme de rabats souples, pouvant être déverrouillés par la manoeuvre de la poignée (101). Le volet (103) empêche toute extraction accidentelle du pod (104).

La poche de secours (102) est solidarisée à la sellette (101), soit par des moyens inamovibles tels qu'une couture ou un rivetage, soit par des moyens amovibles tels qu'une fermeture éclair. Ces moyens de solidarisation restreignent un déplacement relatif entre la poche de secours (102) et la sellette (101), notamment un recul de la poche (102) dans la sellette (101). En particulier, la face débouchante de la poche (102) peut être restreinte au niveau de la face latérale de la sellette (101), en disposant les moyens de solidarisation sur leurs arrêtes coïncidentes.

Le pod (104) est un petit sac réalisé en tissu souple, généralement fermé sur une face par quatre rabats. Le pod (104) reçoit le parachute (105), puis est inséré dans la poche (102).

La face externe du pod (104) est solidaire de la poignée (111), dont la traction assure le déverrouillage du volet (103) et l'extraction manuelle du parachute (105).

Selon un mode de réalisation particulier, le pod (104) a une paroi externe comportant des arêtes convexes, lesquels sont disposées le long d'arêtes concaves internes de la poche (102), assurant ainsi la congruence entre le pod (104) et la poche (102) lors de l'éjection du pod (104).

L'airbag (106) permet d'éjecter le pod (104) hors de la poche (102) et de la sellette (101). L'airbag (106) est un sac gonflable inséré entre le fond (110) de la poche (102) et le pod (104). Par son expansion rapide, l'airbag (106) assure une poussée du pod (104) vers la face débouchante de la poche (102).

Un jeu est susceptible d'exister entre les parois externes du pod (104) et les parois internes de la poche de secours (102). L'airbag (106) est de préférence profilé et armé pour éviter toute intrusion d'un pan de parachute (105) ou de sangle pouvant gêner l'éjection du pod (104). Le renforcement peut être assuré soit par des joncs (202), soit par la forme même de l'airbag (106).

De préférence, l'airbag (106) est réalisé dans un tissu synthétique haute résistance, par exemple en polyamide, ou tout autre tissu similaire résistant la pression.

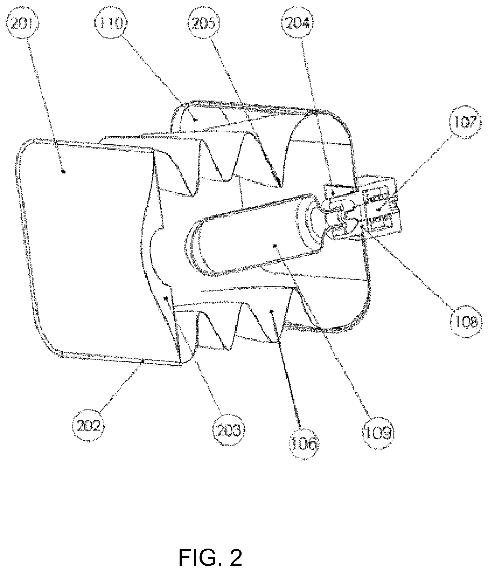

La figure 2 montre un premier mode de réalisation de l'airbag (106), présentant une face plane (201) disposée au contact du pod (104), plus large que la génératrice externe de l'airbag (106). Cela assure ainsi un mouvement de prétension préalable du pod (104) avant l'expansion de l'airbag (106), évitant un choc contre les rabats. Egalement, cela limite le risque d'intrusion d'éléments souples (suspentes en particulier) entre l'airbag (106) et la poche (102).

La face (201) est bordée par un jonc extensible (202), assurant également la congruence entre l'airbag (106) et la poche de secours (102) lors de l'expansion de l'airbag (106). La face (201) peut présenter une partie plus rigide (203), ajourée d'un orifice, par exemple en son centre.

En outre, l'airbag (106) a une paroi externe en forme d'accordéon, comportant des plis (205) internes et externes préformés. Les plis (205) externes viennent en appui contre les parois internes de la poche de secours (102), assurant ainsi la congruence entre l'airbag (106) et la poche de secours (102) lors de l'expansion de l'airbag (106).

L'airbag (106) est gonflé par expansion d'un gaz stocké dans une ou plusieurs cartouches (109).

Le contenu de la ou des cartouches (109) est de préférence du dioxyde de carbone, ou un gaz à basse température critique (azote, argon, hélium), purs ou associés selon toutes variantes de proportions. Le ou les gaz peuvent être stockés sous forme liquide ou gazeuse, à des pressions de l'ordre de 200 à 300 bars dans les conditions normales de fonctionnement du dispositif (entre -20° C et +40° C). Le ou les cartouches (109) peuvent être scellées ou comporter une valve d'étanchéité. De telles cartouches (109) sont disponibles sur le marché à des coûts modestes.

Le ou les cartouches (109) sont vissées dans un système de percussion (108) libérant le gaz dans l'airbag (106).

Le système de percussion (108) peut comporter des moyens mécaniques, électroniques et/ou pyrotechniques. La mise en communication du contenu de la ou des cartouches (109) peut être assurée par un poinçon (107), pénétrant la surface d'obturation de la cartouche ou repoussant la valve d'étanchéité. La libération du ou des gaz se produit dans une chambre d'expansion communicante avec l'airbag (106).

Selon un mode de réalisation particulier, les cartouches (109) sont placées dans l'airbag (106). Cette solution est éprouvée dans les gilets de sauvetage et permet d'éviter toute déformation lors de l'utilisation de la sellette (101) ou point dur lors d'une chute sur l'airbag inférieur de la sellette.

De préférence, le ou les cartouches (109) sont insérées dans l'airbag (106) suivant son axe longitudinal, suivant la direction de déploiement. Cela permet d'isoler les cartouches et de les protéger des chocs.

D'autres variantes de positionnement des cartouches (109) peuvent être envisagées sans sortir du cadre de l'invention.

Le déverrouillage des volets (103) est assuré par un système simple et fiable, adapté à la grande majorité des sellettes (101) actuellement utilisées.

En termes de commande du dispositif d'éjection, plusieurs variantes peuvent être installées selon un principe de conception unique de l'éjecteur :
1. Commande de l'éjection mécanique assurée par action sur une poignée (101) manuelle assurant le déverrouillage manuel des volets (103) et le déclenchement du système de percussion (108).
2. Commande de l'éjection par un bouton relié à un interrupteur, situé en tout point de la sellette (101) et relié à un système électrique déclenchant, d'une part, un système de percussion (108) à initiation pyrotechnique et, d'autre part, un cutter pyrotechnique (155) déverrouillant les volets (103). Le déclenchement peut se faire à distance par radiocommande (par exemple en école de pilotage ou stage de prévention des incidents de vol). On peut imaginer une action automatique pilotée par gyroscope et accéléromètre, mais le risque de déclenchement intempestif reste alors très élevé. Les éléments pyrotechniques s'activent en enceinte close, de sorte qu'ils ne peuvent endommager aucun des éléments constituant la sellette (101).
3. De préférence, association des deux types de commande.

Ces variantes :
- ne modifient pas la conception de la sellette (101), en particulier le verrouillage du volet (103) maintenant le pod (104) dans la poche (102) ;
- conservent la possibilité d'une éjection manuelle par poignée (111) de secours, telle que celle-ci est mise en oeuvre sur les sellettes (101) actuelles ;
- autorisent une temporisation (par exemple de quelques dixièmes de seconde) entre le déverrouillage du volet (103) et l'éjection du pod (104), évitant une déchirure du volet (104) par le pod (104) et/ou un coincement du pod (104) dans la poche (102).

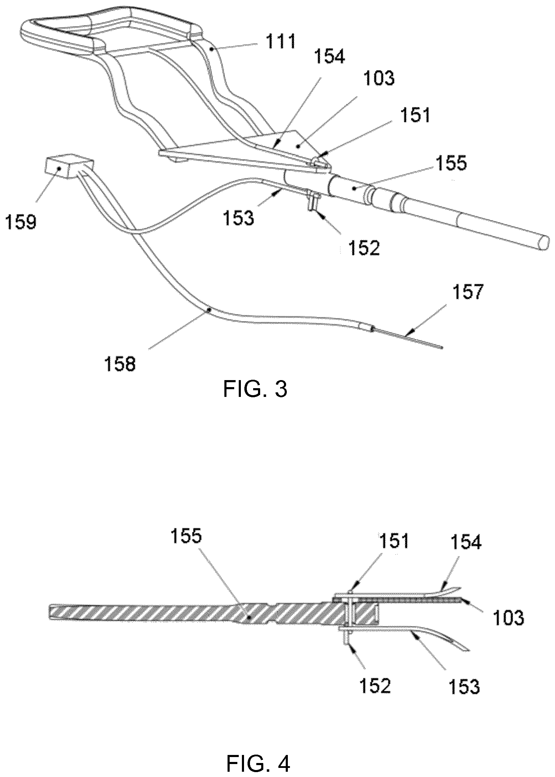

Les figures 3 et 4 montrent un exemple de système de déverrouillage d'un volet (103). Seul un volet (103) est représenté, mais le dispositif peut comporter quatre volets (103) disposés en pétales, ou tout autre nombre de volets (103) selon toute configuration.

Deux brins élastiques (151, 152) recourbés délimitent des lumières, dont un brin (151) libre et un brin (152) prévu pour être arrimé à la sellette (101). Les brins (151, 152) sont accolés et solidarisés suivant un axe de tension par le passage d'un jonc (153) dans leurs lumières respectives pour former une chaîne élastique. Un jonc ou un crochet ouvert (154) relié à la poignée (111) passe dans la lumière du brin (151) libre, maintenant la tension de la chaîne élastique ainsi formée. Un coulisseau (159) est connecté d'une part au jonc (153), et d'autre part au système de percussion (108) via un jonc (157) logé dans une gaine (158).

En mode commande manuelle, une action sur la poignée de secours (111) tire le jonc ou le crochet ouvert (154), ou bien une action sur le coulisseau (159) tire le jonc (153), rompant la chaîne élastique et libérant le volet (103). La temporisation entre le déverrouillage du volet (103) et l'éjection du pod (104) est introduite par les longueurs différentes entre les joncs (153, 154) libérant le volet (103) et le jonc (157) déclenchant le système de percussion (108). Le caractère semi-rigide des joncs (153, 154, 157) et le coulissement du jonc (157) dans la gaine (316) maintient leurs longueurs respectives lors des déformations de la sellette (101).

En mode commande déportée, l'actionnement du cutter (155) sectionne le brin (151) libre, rompant la chaîne élastique et libérant le volet (103). La temporisation entre le déverrouillage du volet (103) et l'éjection du pod (104) est assurée par un boiter électronique, générant un délai entre chacune des impulsions déclenchant le cutter (155) et le système de percussion (108).

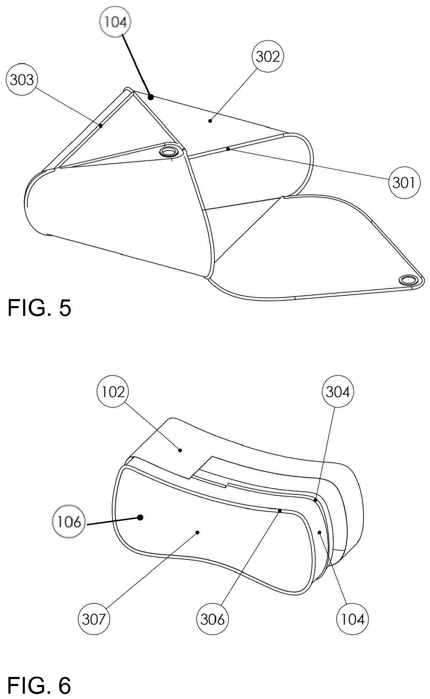

D'autres modes de réalisation d'un dispositif conforme à l'invention sont montrés aux figures 5 à 17. Certains éléments constitutifs du dispositif sont comparables à ceux du premier mode de réalisation décrit plus haut et, dans un but de simplification, portent les mêmes références numériques.

Les figures 5 à 11 montrent des modes de réalisation particuliers, dans lesquels l'airbag (106) peut être constitué par une chambre d'expansion de gaz, formée directement entre les parois internes et le fond de la poche (102) d'une part, et la paroi arrière du pod (104) d'autre part. Autrement dit, l'airbag (106) peut ne pas être constitué par un élément distinct disposé dans la poche (102), comme sur les figures 1 et 2.

La figure 5 montre un mode de réalisation particulier du pod (104), qui peut être utilisé avec l'airbag (106) constitué par un élément distinct disposé dans la poche (102), ou constitué par une chambre d'expansion de gaz formée dans la poche (102).

Le pod (104) comprend plusieurs rabats (302) qui enveloppent le parachute de secours (105) et des joncs semi-rigides (301, 303) qui raidissent les rabats (302) et assurent la rigidité du pod (104) et sa congruence avec la poche de secours (102). Les joncs (301, 303) ont une section de 1 à 5 mm.

La figure 6 montre un autre mode de réalisation particulier du pod (104), qui est utilisé avec l'airbag (106) constitué par une chambre d'expansion de gaz formée dans la poche (102), partiellement représentée dans un but de simplification.

Le pod (104) comprend des joncs semi-rigides (304, 306), continus ou discontinus, qui assurent sa rigidité et sa congruence avec la poche de secours (102). Les joncs (304, 306) coïncident avec les génératrices de la poche de secours (102) ou sont disposés en biais par rapport auxdites génératrices. Leurs élasticités conjuguées assurent la congruence du pod (104) avec la paroi interne de la poche de secours (102).

En particulier, le pod (104) comprend un jonc semi-rigide (306) annulaire qui tend et rigidifie la face (307) du pod (104) orientée vers le fond de la poche de secours (102). Cette face (307) fait office de piston rigide en contact avec la chambre (106).

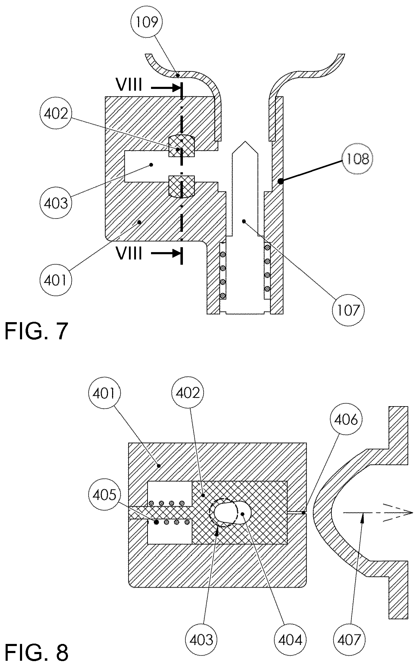

Les figures 7 à 11 montrent des modes de réalisation particuliers du système de percussion (108), empêchant une éjection trop puissante du pod (104) susceptible d'entrainer des lésions corporelles en cas de déclenchement intempestif au sol, tout en libérant une énergie suffisante pour contrer une rotation de la sellette (101) en vol.

Les figures 7 et 8 montrent un système de percussion (108) comprenant un corps (401) et une masselotte (402) mobile dans le corps (401). Plus précisément, la masselotte (402) coulisse dans une rainure usinée ou moulée dans le corps (401), d'une longueur supérieure à la face de glissement de la masselotte. Le corps (401) comprend un conduit (403) reliant la cartouche de gaz (109) après sa percussion par un poinçon (107) à la sortie d'expansion du gaz. La masselotte (402) coulisse à travers le conduit (403) dans l'axe d'éjection (407) du pod (104) et est maintenue par un ressort (405) poussant dans le sens de l'éjection. Un orifice (406) de quelques dixièmes de millimètres de diamètre communiquant avec l'air libre et reliant la face de la rainure opposée au ressort (405) assure un amortissement de la masselotte (402). La masselotte (402) est percée, perpendiculairement au conduit (403), par une rainure oblongue (404) dont la distance entre les faces adjacentes va croissante dans le sens inverse de l'axe d'éjection (407) et accroit le diamètre libre du conduit (403).

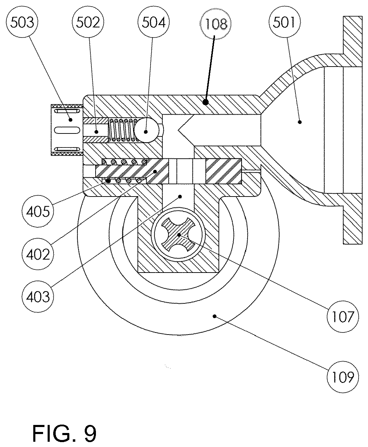

La figure 9 montre un système de percussion (108) disposé entre la cartouche (109), un premier diffuseur (501) communiquant avec la chambre (106), et un second diffuseur (503) communiquant avec l'airbag dorsal. Le système (108) comprend la masselotte (402), le conduit (403) et le ressort (405). Le système (108) comprend également un conduit (502) muni d'un réducteur de pression (504) à bille ou à pointeau, et le diffuseur (503) communiquant avec l'airbag dorsal. Le réducteur de pression (504) contrôle la pression d'expansion de l'airbag dorsal.

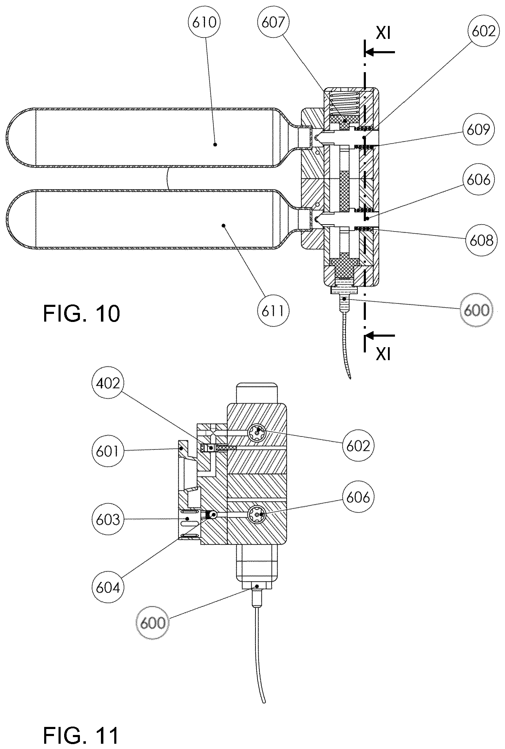

Les figures 10 et 11 montrent un système de percussion (108) dans lequel une cartouche de gaz (610) assure l'expansion de la chambre (106) formée dans la poche (102) et l'éjection du pod (104) contenant le parachute de secours (105), tandis qu'une autre cartouche de gaz (611) assure l'expansion de l'airbag dorsal équipant la sellette (101). Ces cartouches (610, 611) peuvent contenir des gaz de nature différente, par exemple argon et dioxyde de carbone.

Le déclencheur pyrotechnique (600) libère simultanément deux poinçons percuteurs (602, 606) maintenus par deux ressorts, en déplaçant une came de verrouillage (607) maintenant les deux poinçons percuteurs (602, 606) par un épaulement.

Le gaz libéré par la cartouche de gaz (611) s'échappe progressivement dans l'airbag dorsal via un diffuseur (603), sous une pression contrôlée par un réducteur de pression (604) à bille ou à pointeau.

Après éjection du parachute, le dispositif assure un maintien en expansion de l'airbag dorsal de la sellette (101) en délivrant une surpression constante de 60 à 100 pascals pendant 30 secondes.

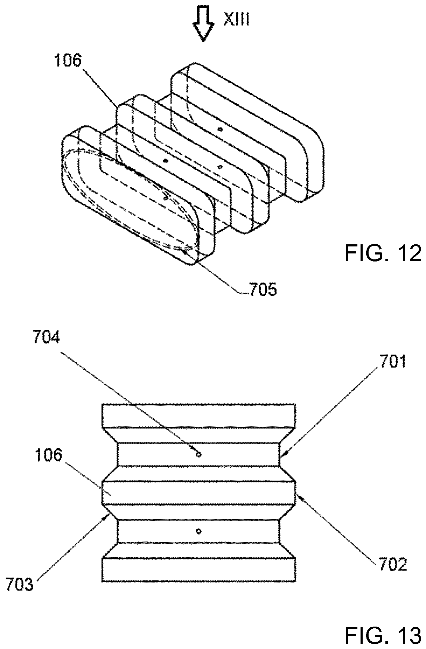

Les figures 12 à 14 montrent un mode de réalisation particulier de l'airbag (106) disposé dans la poche (102). L'airbag (106) est constitué de bandes de tissus formant des anneaux aplatis (701, 702) générant une surface cylindrique. Deux anneaux superposés (701, 702) sont reliés par un anneau (703) formant une surface conique tronquée.

Un ou plusieurs anneaux (701, 702) peuvent être percés d'un ou plusieurs orifices radiaux (704), de l'ordre de 0,5 mm à 1 mm de diamètre, assurant une montée en pression dans la poche de secours (102), ce qui facilite le mouvement du pod (104) et prévient tout coincement.

Les anneaux (701, 702) peuvent être constitués de bandes de tissu alignés et assemblés de façon à générer une surface hyperboloïde à une nappe enserrant un volume se déployant radialement lors du gonflement de l'airbag (106).

Chacune des deux faces avant et arrière de l'airbag (106) peut être armée par des joncs extensibles (705) assurant une bonne congruence entre les courbes directrices interceptant le fond (110) ou l'abouchement de la poche (102).

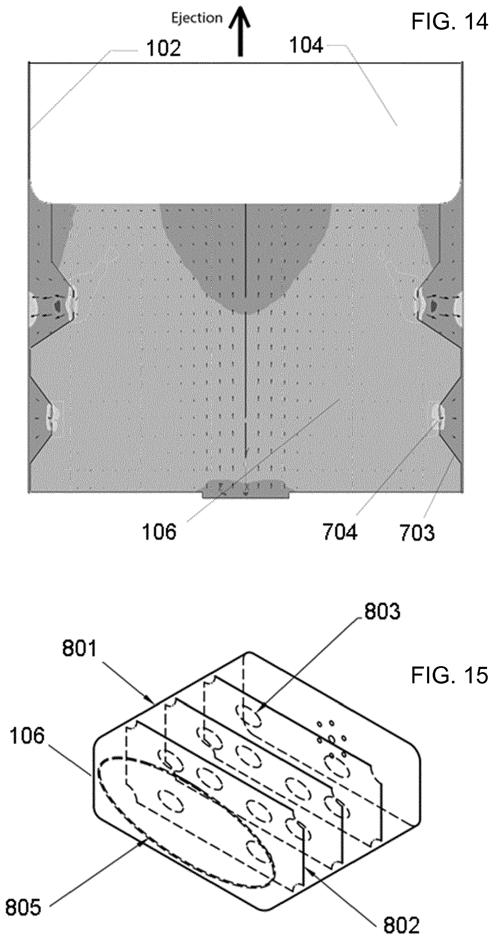

La figure 15 montre un autre mode de réalisation particulier de l'airbag (106) disposé dans la poche (102). L'airbag (106) est constitué d'un sac gonflable (801), dont l'expansion est contrariée par des cloisons internes (802), reliées par leurs limites à ses bases ou à sa surface cylindrique et ajourées (803) afin de permettre la circulation du gaz de gonflage.

Chacune des deux faces avant et arrière de l'airbag (106) peut être armée par des joncs extensibles (805) assurant une bonne congruence entre les courbes directrices interceptant le fond (110) ou l'abouchement de la poche (102).

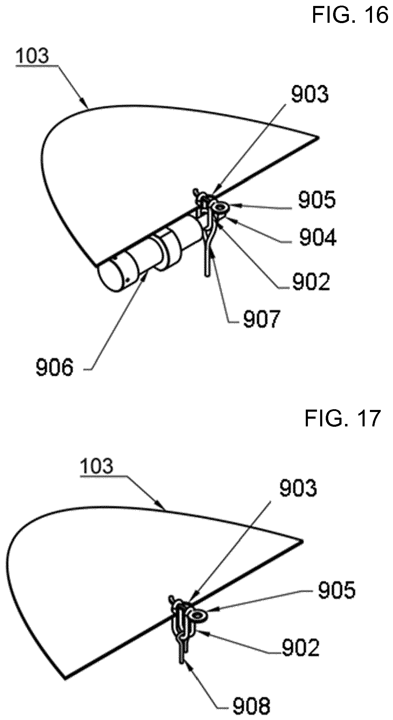

La figure 16 montre un mode de réalisation particulier du système de déverrouillage d'un volet (103) obturant la poche de secours (102). Seul un volet (103) est représenté, mais le dispositif peut comporter plusieurs volets (103).

Le volet (103) est retenu de part et d'autre par un anneau replié (902) formant deux paires de boucles perpendiculaires passant dans un orifice du volet (103). Sur la face interne du volet (103), la boucle est traversée par un axe de déverrouillage (904). Sur la face externe du volet (103), la bouche est traversée par une goupille (905) reliée à une poignée de secours (111). L'axe de déverrouillage (904) est constitué d'un jonc ou d'un axe mu par un vérin à tirant (906). L'axe (904) passe conjointement dans la boucle interne de l'anneau replié (902) et dans une boucle (907) dont les brins sont solidaires de la sellette (101) ou du volet (103). Une action sur la poignée de secours (111) ou un retrait de l'axe de déverrouillage (904) rompt la chaîne élastique et provoque l'ouverture du volet (103).

La figure 17 montre une variante du système de déverrouillage de la figure 16. Une boucle (908), solidaire du volet (103) ou de la sellette (101), passe dans la boucle interne de l'anneau replié (902). Une action sur la poignée de secours (111) ou la section d'un brin de la boucle (908) rompt la chaîne élastique et provoque l'ouverture du volet (103).

En variante non représentée, le système de déverrouillage peut comporter un aimant fixé sur un jonc semi-rigide, qui coulisse dans une gaine et déverrouille le volet (103) en libérant une boucle élastique reliée à la sellette (101). Lors de la traction du jonc, l'aimant active un interrupteur ILS relié au système de percussion (108). La différence entre deux distances, d'une part celle entre la partie distale du jonc et la boucle élastique et, d'autre part, celle entre l'aimant et la partie activable de l'ILS, va définir le délai entre le déverrouillage et éjection. L'avantage de ce système est sa simplicité et sa miniaturisation, un petit boitier pouvant prendre place dans un rabat de couture.

Par ailleurs, le dispositif peut être conformé différemment des figures 1 à 17 sans sortir du cadre de l'invention.

En outre, les caractéristiques techniques des différents modes de réalisation et variantes mentionnés ci-dessus peuvent être, en totalité ou pour certaines d'entre elles, combinées entre elles.

Ainsi, le dispositif peut être adapté en termes de coût, de fonctionnalités et de performance.

## Revendications

1. Dispositif de sécurité conçu pour équiper une sellette (101) de parapente ou d'aéronef, le dispositif comprenant :
- une poche de secours (102), qui est prévue pour être intégrée à la sellette (101), qui comprend un matériau résistant à une expansion radiale et axiale, et qui présente une face débouchante et un fond ;
- un pod (104) inséré dans la poche de secours (102) ;
- un parachute de secours (105) plié dans le pod (104) ;
- un airbag (106) agencé entre le fond de la poche de secours (102) et le pod (104) ; et
- des moyens d'expansion (108, 109) de l'airbag (106) ;
dans lequel lors de l'expansion de l'airbag (106), le pod (104) est éjecté par la face débouchante de la poche de secours (102), et le parachute de secours (105) se déploie.

2. Dispositif selon la revendication 1, **caractérisé en ce que** le pod (104) a une paroi externe comportant des arêtes convexes, lesquels sont disposées le long d'arêtes concaves internes de la poche de secours (102), assurant ainsi la congruence entre le pod (104) et la poche de secours (102) lors de l'éjection du pod (104).

3. Dispositif selon l'une des revendications précédentes 1 ou 2, **caractérisé en ce que** l'airbag (106) est une chambre formée directement dans la poche de secours (102).

4. Dispositif selon l'une des revendications précédentes 1 ou 2, **caractérisé en ce que** l'airbag (106) est un élément distinct de la poche de secours (102), et est disposé dans la poche de secours (102).

5. Dispositif selon la revendication 4, **caractérisé en ce que** l'airbag (106) a une paroi externe en forme d'accordéon, ayant des plis (205) externes disposés en appui contre les parois internes de la poche de secours (102), assurant ainsi la congruence entre l'airbag (106) et la poche de secours (102) lors de l'expansion de l'airbag (106).

6. Dispositif selon l'une des revendications précédentes 4 ou 5, **caractérisé en ce que** l'airbag (106) comporte un ou plusieurs joncs extensibles (202, 705, 805), assurant la congruence entre l'airbag (106) et la poche de secours (102) lors de l'expansion de l'airbag (106).

7. Dispositif selon l'une des revendications précédentes 4 à 6, **caractérisé en ce que** l'airbag (106) comprend des bandes de tissu formant des anneaux (701, 702) aplatis constituant chacun un cylindre.

8. Dispositif selon l'une des revendications précédentes 4 à 6, **caractérisé en ce que** l'airbag (106) est constitué d'un sac gonflable (801), dont l'expansion est contrariée par des cloisons internes (802), ajourées (803) afin de permettre la circulation du gaz de gonflage.

9. Dispositif selon l'une des revendications précédentes, **caractérisé en ce que** le pod (104) comprend plusieurs rabats (302) qui enveloppent le parachute de secours (105) et des joncs semi-rigides (301, 303, 304, 306) qui raidissent les rabats (302) et assurent la rigidité du pod (104) et sa congruence avec la poche de secours (102).

10. Dispositif selon l'une des revendications précédentes, **caractérisé en ce que** le pod (104) est muni de joncs semi-rigides (304), continus ou discontinus, coïncidant avec les génératrices de la poche de secours (102) ou disposés en biais par rapport auxdites génératrices, et dont les élasticités conjuguées assurent la congruence du pod (104) avec la paroi interne de la poche de secours (102).

11. Dispositif selon l'une des revendications précédentes, **caractérisé en ce que** les moyens d'expansion (108, 109) de l'airbag (106) comprennent au moins une cartouche de gaz comprimé (109) et un système de percussion (108), qui assure la libération du gaz stocké dans l'au moins une cartouche de gaz comprimé (109).

12. Dispositif selon la revendication 11, **caractérisé en ce que** le système de percussion (108) comprend une cartouche de gaz (610) assurant l'expansion de l'airbag (106) agencé dans la poche de secours (102) et l'éjection du pod (104) contenant le parachute de secours (105), et une cartouche de gaz (611) assurant l'expansion d'une airbag dorsal équipant la sellette (101).

13. Dispositif selon l'une des revendications précédentes, **caractérisé en ce qu'**il comprend un ou plusieurs volets (103) obturant la face débouchante de la poche de secours (102).

14. Dispositif selon la revendication 13, **caractérisé en ce que** le ou les volets (103) sont retenus de part et d'autre par un anneau replié (902), passant par un orifice (903) traversant le ou les volets (103), formant deux paires de boucles coaxiales dans lesquelles passent, sur une première face du volet (103), un axe de déverrouillage (904) ou une boucle (908) et, sur une deuxième face du volet (103), une goupille (905) reliée à une poignée de secours (111).

15. Sellette (101) de parapente ou d'aéronef, **caractérisé en ce qu'**elle est équipée d'un dispositif de sécurité selon l'une des revendications 1 à 14.

## Patentansprüche

1. Sicherheitsvorrichtung, entwickelt zur Ausrüstung eines Gleitschirmsitzes oder eines Luftfahrzeugsitzes (101), umfassend:
- eine Notfalltasche (102), vorgesehen zur Integration in den Sitz (101), aus einem gegen radiale und axiale Ausdehnung widerstandsfähigen Material, mit einer Öffnung auf einer Seite und einem Boden;
- ein Pod (104), eingelegt in die Notfalltasche (102)
- ein Notfallschirm (105), gefaltet im Pod (104);
- ein Airbag (106), vorgesehen zwischen dem Boden der Notfalltasche (102) und dem Pod (104); und
- Expansionsmittel (108, 109) für den Airbag (106);
bei dem, während der Expansion des Airbags (106) der Pod (104) durch die Öffnung der Notfalltasche (102) hinausgeschleudert wird und sich der Notfallschirm (105) entfaltet.

2. Vorrichtung nach Anspruch 1, **dadurch gekennzeichnet, dass** der Pod (104) eine Außenwand, mit konvexen Kanten hat, die entlang konkaver Innenkanten der Notfalltasche (102) angeordnet sind und so die Kongruenz zwischen dem Pod (104) und der Notfalltasche (102) beim Hinausschleudern des Pod (104) sicherstellen.

3. Vorrichtung nach einem der vorhergehenden Ansprüche 1 oder 2, **dadurch gekennzeichnet, dass** der Airbag (106) eine Kammer ist, die direkt in der Notfalltasche (102) gebildet wurde.

4. Vorrichtung nach einem der vorhergehenden Ansprüche 1 oder 2, **dadurch gekennzeichnet, dass** der Airbag (106) ein Element ist, das getrennt von der Notfalltasche (102) ist und in der Notfalltasche (102) untergebracht ist.

5. Vorrichtung nach Anspruch 4, **dadurch gekennzeichnet, dass** der Airbag (106) eine akkordeonförmige Außenwand hat, mit Falten (205) außen, die anliegend an die Innenwände der Notfalltasche (102) angeordnet sind und so die Kongruenz zwischen dem Airbag (106) und der Notfalltasche (102) bei der Expansion des Airbags (106) sicherstellen

6. Vorrichtung nach einem der vorhergehenden Ansprüche 4 oder 5, **dadurch gekennzeichnet, dass** der Airbag (106) ein oder mehrere ausziehbare Stangen (202, 705, 805) aufweist, die die Kongruenz zwischen dem Airbag (106) und der Notfalltasche (102) bei Expansion des Airbags (106) sicherstellen.

7. Vorrichtung nach einem der vorhergehenden Ansprüche 4 bis 6, **dadurch gekennzeichnet, dass** der Airbag (106) Gewebestreifen enthält, die die Form abgeflachter Ringe (701, 702) haben und jeweils einen Zylinder bilden.

8. Vorrichtung nach einem der vorhergehenden Ansprüche 4 bis 6, **dadurch gekennzeichnet, dass** der Airbag (106) aus einem aufblasbaren Beutel (801) besteht, dessen Expansion Innenwände (802) entgegenwirken, die durchbrochen (803) sind, damit das Aufblasgas zirkulieren kann.

9. Vorrichtung nach einem der vorhergehenden Ansprüche, **dadurch gekennzeichnet, dass** der Pod (104) mehrere Laschen (302) umfasst, die den Notfallschirm (105) umgeben sowie halb-starre Stäbe (301, 303, 304, 306), die die Laschen (302) aussteifen und für die Steifigkeit des Pods (104) und seiner Kongruenz mit der Notfalltasche (102) sorgen.

10. Vorrichtung nach einem der vorhergehenden Ansprüche, **dadurch gekennzeichnet, dass** der Pod (104) mit mehreren halb-starren Stäben (304) ausgerüstet ist, durchgängig oder nicht, die mit den Auslösern der Notfalltasche (102) zusammenfallen oder schräg zu diesen Auslösern angeordnet sind und deren zusammengenommene Elastizität die Kongruenz des Pods (104) mit der Innenwand der Notfalltasche (102) sicherstellen.

11. Vorrichtung nach einem der vorhergehenden Ansprüche 4 oder 5, **dadurch gekennzeichnet, dass** die Expansionsmittel (108, 109) für den Airbag (106) mindestens eine Kartusche mit komprimiertem Gas (109) und ein Schlagsystem (108) enthalten, die die Freisetzung des in der mindestens einen Kartusche mit komprimiertem Gas (109) enthaltenen Gases sicherstellen.

12. Vorrichtung nach Anspruch 11, **dadurch gekennzeichnet, dass** das Schlagsystem (108) eine Gaskartusche (610) enthält, die die Expansion des Airbags (106) gewährleistet, angeordnet in der Notfalltasche (102) und das Hinausschleudern des Pods (104) mit dem Notfallschirm (105) und eine Gaskartusche (611) die die Expansion eines Rückenairbags sicherstellt, mit dem der Sitz (101) ausgerüstet ist.

13. Vorrichtung nach einem der vorhergehenden Ansprüche, **dadurch gekennzeichnet, dass** sie eine oder mehrere Klappen (103) umfasst, die die Öffnung der Notfalltasche (102) verschließen.

14. Vorrichtung nach Anspruch 13, **dadurch gekennzeichnet, dass** die Klappe oder Klappen (103) auf beiden Seiten von einem eingeklappten Ring (902) zurückgehalten werden, der durch eine Öffnung (903) führt, die durch die Klappe oder Klappen (103) hindurchführt, wodurch zwei Paar koaxiale Schleifen gebildet werden, durch die auf einer ersten Klappenseite (103) eine Entriegelungsachse (904) führt oder eine Schleife (908) und, auf einer zweiten Klappenseite (103), ein Stift (905), verbunden mit einem Notfallgriff (111).

15. Sitz (101) eines Gleitschirms oder eines Luftfahrzeugs, **dadurch gekennzeichnet, dass** er mit einer Sicherheitsvorrichtung nach einem der Ansprüche 1 bis 14 ausgerüstet ist.

## Claims

1. Safety device designed to equip a paraglider or aircraft harness (101), the device comprising:
- an emergency pocket (102), which is intended to be integrated into the harness (101), comprising a material resisting radial and axial expansion, and which has an open-through face and a bottom;
- a pod (104) inserted in the emergency pocket (102);
- an emergency parachute (105) folded into the pod (104);
- an airbag (106) located between the bottom of the emergency pocket (102) and the pod (104); and
- expansion means (108, 109) for the airbag (106) ;
in which during the expansion of the airbag (106), the pod (104) is ejected through the open-through face of the emergency bag (102), and the emergency parachute (105) is deployed.

2. Device according to claim 1, **characterized in that** the pod (104) has an outer wall comprising convex edges, arranged along inner concave edges of the emergency pocket (102), thus ensuring congruence between the pod (104) and the emergency pocket (102) when the pod (104) is ejected.

3. Device according to one of the prior claims 1 or 2, **characterized in that** the airbag (106) is a chamber formed directly in the emergency pocket (102).

4. Device according to one of the prior claims 1 or 2, **characterized in that** the airbag (106) is an element distinct from the emergency pocket (102), and is placed in the emergency pocket (102).

5. Device according to claim 4, **characterized in that** the airbag (106) has an outer wall in the shape of an accordion, having outer pleats (205) arranged to bear on inner walls of the emergency pocket (102), thus ensuring congruence between the airbag (106) and the emergency pocket (102) when the airbag (106) inflates.

6. Device according to one of the prior claims 4 or 5, **characterized in that** the airbag (106) has one or more extensible rods (202, 705, 805), ensuring congruence between the airbag (106) and the emergency pocket (102) during the inflation of the airbag (106).

7. Device according to one of the prior claims 4 to 6, **characterized in that** the airbag (106) comprises flattened fabric strips forming rings (701, 702) each forming a cylinder.

8. Device according to one of the prior claims 4 to 6, **characterized in that** the airbag (106) is made of an inflatable bag (801), the inflation of which is impeded by internal partitions (802), cut out (803) to allow the circulation of the inflation gas.

9. Device according to any one of the prior claims, **characterized in that** the pod (104) comprises several flaps (302) that wrap around the emergency parachute (105) and semi-rigid rods (301, 303, 304, 306) which stiffen the flaps (302) and ensure the rigidity of the pod (104) and its congruence with the emergency pocket (102).

10. Device according to one of the previous claims, **characterized in that** the pod (104) has semi-rigid rods (304), continuous or discontinuous, coinciding with the generating lines of the emergency pocket (102) or arranged at an angle with respect to said generating lines, and whose combined elasticity ensures the congruence of the pod (104) with the internal wall of the emergency pocket (102).

11. Device according to one of the prior claims, **characterized in that** the expansion means (108, 109) of the airbag (106) comprise at least one compressed gas cartridge (109) and a striker system (108), which ensures the release of the gas stored in the at least one compressed gas cartridge (109).

12. Device according to claim 11, **characterized in that** the striker system (108) comprises a gas cartridge (610) inflating the airbag (106) arranged in the emergency pocket (102) and ejecting the pod (104) containing the emergency parachute (105), and a gas cartridge (611) ensuring expansion of a back airbag equipping the harness (101).

13. Device according to one of the prior claims, **characterized in that** it comprises one or more flaps (103) closing the open-through face of the emergency pocket (102).

14. Device according to claim 13, **characterized in that** the flap(s) (103) is/are retained on either side by a folded ring (902), passing through an orifice (903) through the flap(s) (103), forming two pairs of coaxial loops through which pass, on a first face of the flap (103), an unlocking pin (904) or a loop (908) and, on a second face of the flap (103), a pin (905) connected to an emergency handle (111).

15. Paragliding or aircraft harness (101), **characterized in that** it is equipped with a safety device according to one of claims 1 to 14.
